# EUROPEAN PATENT APPLICATION

(11) **EP 3 253 023 A1**
(43) Date of publication of application: **06.12.2017**
(21) Application number: 16742693.1
(22) Date of filing: 21.01.2016
(51) Int. Cl.: H04L 29/06, H04L 29/08

(54) **METHOD FOR ACCESSING CLOUD SERVICE AND ACCESS DEVICE**

(30) Priority: 31.01.2015 CN 201510053184
(71) Applicant: Huawei Technologies Co., Ltd., Longgang District Shenzhen, Guangdong 518129 (CN)
(72) Inventor: WANG, Chao, Shenzhen Guangdong 518129 (CN); ZHOU, Weiqiang, Shenzhen Guangdong 518129 (CN)
(74) Representative: Isarpatent
(86) International application number: PCT/CN2016/071611
(87) International publication number: WO 2016/119631

(57) **Abstract**

The present invention discloses a method for accessing a cloud service and an access device, to resolve prior-art problems that a degree of complexity of establishing a connection is increased and work efficiency is reduced due to the fact that information such as each cloud service interface type and cloud service interface version needs to be verified manually. The method is: sending, to a to-be-accessed cloud service, an access request packet that includes a cloud service interface type identifier of a piece of characteristic information and an access address of the to-be-accessed cloud service, when an access response packet that is returned by the to-be-accessed cloud service and that indicates successful matching is received, using interface version information corresponding to the cloud service interface type identifier as target cloud service interface version information, and connecting to the to-be-accessed cloud service based on the target cloud service interface version information and the access account. In this case, an access device can adaptively determine a cloud service interface type and interface version information of a to-be-accessed cloud service, and connect to the to-be-accessed cloud service, so that a degree of complexity of establishing a connection to a cloud service is decreased, and work efficiency is increased.

## Description

This application claims priority to Chinese Patent Application No. 201510053184.2, filed with the Chinese Patent Office on January 31, 2015 and entitled "METHOD FOR ACCESSING CLOUD SERVICE AND ACCESS DEVICE", which is incorporated herein by reference in its entirety.

### TECHNICAL FIELD

The present invention relates to the field of communications technologies, and in particular, to a method for accessing a cloud service and an access device.

### BACKGROUND

To promote development of information technologies and communications technologies, researchers in the communications field pay more attention to a network functions virtualization (Network Functions Virtualization, NFV) technology due to its advantages of providing a new network environment and improving work efficiency.

The NFV technology is to deploy a previous telecommunications application on virtualized infrastructure in a form of virtualized software by means of a large-capacity server, a storage device and a network. The NFV technology can separate data and a control platform, so that a network device can add and control a virtual device as required, thereby implementing management on software, such as installation, modification, and uninstallation, implementing management on virtual network functions, and finally implementing service expansion.

In NFV system infrastructure, a virtualized network function manager (Virtualized Network Function Manager, VNFM) and a virtualized infrastructure manager (Virtualized Infrastructure Manager, VIM) establish a connection by using an interface, to implement management on a virtualized network function (Virtualized Network Function, VFN), where the VIM is specifically a cloud service.

In a process of establishing a connection between the VNFM and the cloud service, the VNFM needs to determine information of a VIM to be accessed, for example, a cloud service interface type, a cloud service interface version, a cloud service access address, and an access account; the VNFM logs in to a designated cloud service by using the cloud service access address and the access account, and starts to create a VNF; and the VNFM loads a corresponding client software package according to the cloud service interface type and the cloud service interface version, thereby establishing a connection to the VIM.

A VNFM can simultaneously access multiple cloud services of different types. Because there are many types of cloud services, and different cloud services provide different cloud service interface types and cloud service interface versions, when the VNFM connects to each cloud service, information such as each cloud service interface type and cloud service interface version needs to be verified manually, and consequently, a degree of complexity of establishing a connection is increased, and work efficiency is reduced.

### SUMMARY

Embodiments of the present invention provide a method for accessing a cloud service and an access device, to resolve prior-art problems that a degree of complexity of establishing a connection is increased and work efficiency is reduced due to the fact that information such as each cloud service interface type and cloud service interface version needs to be verified manually.

Specific technical solutions provided in the embodiments of the present invention are as follows: According to a first aspect, a method for accessing a cloud service is provided, where the method is applied to an access device, and the method includes:
obtaining an access address and an access account of a to-be-accessed cloud service;
reading a characteristic information set, where the characteristic information set stores several pieces of characteristic information, and each piece of characteristic information includes one cloud service interface type identifier and at least one piece of cloud service interface version information corresponding to the cloud service interface type identifier;
sending a first access request packet to the to-be-accessed cloud service, where the first access request packet includes a cloud service interface type identifier in first characteristic information and the access address, and the first characteristic information is a piece of characteristic information in the characteristic information set; and
if a first access response packet returned by the to-be-accessed cloud service based on the first access request packet is received, connecting to the to-be-accessed cloud service based on target cloud service interface version information and the access account, where the target cloud service interface version information is one of at least one piece of cloud service interface version information in the first characteristic information, and the first access response packet indicates that an interface type of the to-be-accessed cloud service matches the cloud service interface type identifier in the first characteristic information.

With reference to the first aspect, in a first possible implementation manner, the method further includes:
if the first access response packet is not received, sending a second access request packet to the to-be-accessed cloud service, where the second access request packet includes a cloud service interface type identifier in second characteristic information and the access address, and the second characteristic information is a piece of characteristic information different from the first characteristic information in the characteristic information set.

With reference to the first aspect or the first possible implementation manner of the first aspect, in a second possible implementation manner, the cloud service interface version information includes a cloud service interface version uniform resource locator URL.

With reference to the second possible implementation manner of the first aspect, in a third possible implementation manner, the connecting to the to-be-accessed cloud service based on target cloud service interface version information and the access account includes:
sending a version request packet to the to-be-accessed cloud service, where the version request packet includes the cloud service interface version URL included in the target cloud service interface version information;
receiving a version response packet returned by the to-be-accessed cloud service based on the version request packet, where the version response packet includes at least one cloud service interface version identifier of the to-be-accessed cloud service;
parsing the version response packet to obtain the at least one cloud service interface version identifier of the to-be-accessed cloud service; and
loading a software resource indicated by a target cloud service interface version identifier, and connecting to the to-be-accessed cloud service according to the access account, where the target cloud service interface version identifier is one of the at least one cloud service interface version identifier included in the version response packet.

With reference to any one of the first aspect or the foregoing possible implementation manners of the first aspect, in a fourth possible implementation manner, the method further includes: updating the characteristic information set.

With reference to the fourth possible implementation manner of the first aspect, in a fifth possible implementation manner, the updating the characteristic information set includes:
performing an adding operation on the characteristic information set, specifically including: adding a to-be-added cloud service interface type identifier and at least one piece of cloud service interface version information corresponding to the to-be-added cloud service interface type identifier to the characteristic information set as new characteristic information; or
performing a modification operation on the characteristic information set, specifically including: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

According to a second aspect, an access device is provided, including:
a first obtaining unit, configured to obtain an access address and an access account of a to-be-accessed cloud service;
a second obtaining unit, configured to read a characteristic information set, where the characteristic information set stores several pieces of characteristic information, and each piece of characteristic information includes one cloud service interface type identifier and at least one piece of cloud service interface version information corresponding to the cloud service interface type identifier;
a sending unit, configured to send a first access request packet to the to-be-accessed cloud service, where the first access request packet includes a cloud service interface type identifier in first characteristic information and the access address, and the first characteristic information is a piece of characteristic information in the characteristic information set; and
a connection unit, configured to: if a first access response packet returned by the to-be-accessed cloud service based on the first access request packet is received, connect to the to-be-accessed cloud service based on target cloud service interface version information and the access account, where the target cloud service interface version information is one of at least one piece of cloud service interface version information in the first characteristic information, and the first access response packet indicates that an interface type of the to-be-accessed cloud service matches the cloud service interface type identifier in the first characteristic information.

With reference to the second aspect, in a first possible implementation manner, the connection unit is further configured to:
if the first access response packet is not received, send a second access request packet to the to-be-accessed cloud service, where the second access request packet includes a cloud service interface type identifier in second characteristic information and the access address, and the second characteristic information is a piece of characteristic information different from the first characteristic information in the characteristic information set.

With reference to the second aspect or the first possible implementation manner of the second aspect, in a second possible implementation manner, the cloud service interface version information includes a cloud service interface version uniform resource locator URL.

With reference to the second possible implementation manner of the second aspect, in a third possible implementation manner, in the aspect of connecting to the to-be-accessed cloud service based on the target cloud service interface version information and the access account, the connection unit is specifically configured to:
send a version request packet to the to-be-accessed cloud service, where the version request packet includes the cloud service interface version URL included in the target cloud service interface version information;
receive a version response packet returned by the to-be-accessed cloud service based on the version request packet, where the version response packet includes at least one cloud service interface version identifier of the to-be-accessed cloud service;
parse the version response packet to obtain the at least one cloud service interface version identifier of the to-be-accessed cloud service; and
load a software resource indicated by a target cloud service interface version identifier, and connect to the to-be-accessed cloud service according to the access account, where the target cloud service interface version identifier is one of the at least one cloud service interface version identifier included in the version response packet.

With reference to any one of the second aspect or the foregoing possible implementation manners of the second aspect, in a fourth possible implementation manner, the access device further includes: an updating unit, configured to update the characteristic information set.

With reference to the fourth possible implementation manner of the second aspect, in a fifth possible implementation manner, the updating unit is specifically configured to:
perform an adding operation on the characteristic information set, specifically including: adding a to-be-added cloud service interface type identifier and at least one piece of cloud service interface version information corresponding to the to-be-added cloud service interface type identifier to the characteristic information set as new characteristic information; or
perform a modification operation on the characteristic information set, specifically including: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

By using the method for accessing a cloud service provided in the present invention, a first access request packet including a cloud service interface type identifier of a piece of characteristic information in a characteristic information set and an access address of a to-be-accessed cloud service is sent to the to-be-accessed cloud service, if a first access response packet that is returned by the to-be-accessed cloud service and that indicates successful matching is received, one of at least one piece of cloud service interface version information corresponding to the cloud service interface type identifier in the characteristic information set is selected as target cloud service interface version information, and the to-be-accessed cloud service is connected based on the target cloud service interface version information and the access account of the to-be-accessed cloud service. In this way, without any manual setting, an access device can construct a first access request packet by means of a cloud service interface type identifier of a piece of characteristic information in a preset characteristic information set, and send the first access request type to a to-be-accessed cloud service; upon reception of a first access response packet that indicates successful matching, the access device can determine a cloud service interface type and cloud service interface version information of the to-be-accessed cloud service, and therefore can connect to the to-be-accessed cloud service, reducing a degree of complexity of establishing a connection to a cloud service is reduced, and improving work efficiency is improved.

### BRIEF DESCRIPTION OF DRAWINGS

FIG. 1 is a schematic diagram of a system architecture of an NFV system according to an embodiment of the present invention;
FIG. 2 is a flowchart of a method for accessing a cloud service according to an embodiment of the present invention;
FIG. 3 is a specific flowchart of a method for accessing a cloud service according to an embodiment of the present invention;
FIG. 4 is a schematic diagram of a communications system architecture of a VNFM and a VIM according to an embodiment of the present invention;
FIG. 5 is a schematic structural diagram of an access device according to an embodiment of the present invention; and
FIG. 6 is a schematic diagram of an access device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Embodiments of the present invention provide a method for accessing a cloud service and an access device, to resolve prior-art problems that a degree of complexity of establishing a connection is increased and work efficiency is reduced due to the fact that information such as each cloud service interface type and cloud service interface version needs to be verified manually. The method and the access device are conceived based on a same invention. The method and the apparatus have similar principles for resolving the problems. Therefore, implementation of the access device and the method may be cross referenced, and details of repeated parts are not described again.

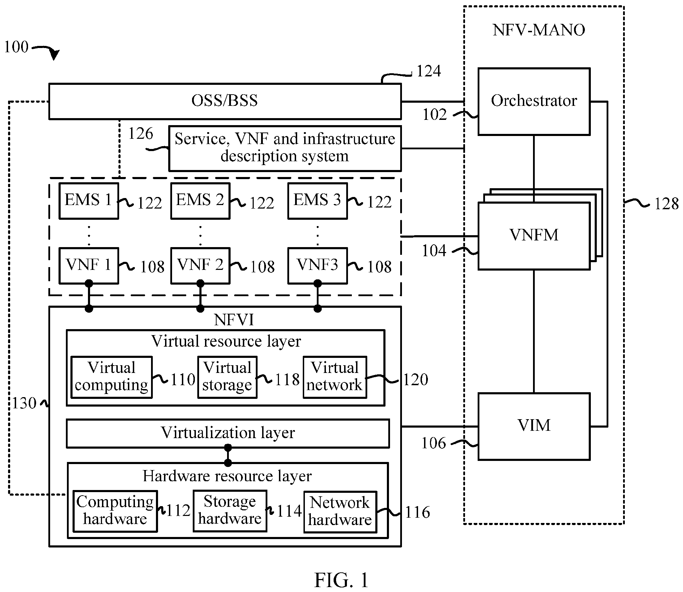

Referring to FIG. 1, an embodiment of the present invention provides a schematic diagram of a system architecture of an NFV system. The NFV system may be implemented by means of various networks, for example, a data center network, a service provider network, or a local area network (Local Area Network, LAN). As shown in FIG. 1, the NFV system may include an NFV management and orchestration system (NFV Management and Orchestration System, NFV-MANO) 128, NFV infrastructure (NFV Infrastructure, NFVI) 130, multiple virtualized network functions (Virtualized Network Function, VNF) 108, multiple element management systems (element management system, EMS) 122, a service, VNF and infrastructure description (Service, VNF and Infrastructure Description) system 126, and one or more operation support systems/business support systems (Operation Support System/Business Support System, OSS/BSS) 124.

The NFV-MANO 128 may include an orchestrator (Orchestrator) 102, one or more VNFMs 104, and one or more virtualized infrastructure managers (Virtualized Infrastructure Manager, VIM) 106. The NFVI 130 may include a hardware resource layer that includes computing hardware 112, storage hardware 114, and network hardware 116; a virtualization layer; and a virtual resource layer that includes virtual computing 110 (for example, a virtual machine), virtual storage 118, and a virtual network 120.

The computing hardware 112 at the hardware resource layer may be a special purpose processor or a general purpose processor configured to provide processing and computing functions. The storage hardware 114 is configured to provide a storage capability, and the storage capability may be provided by the storage hardware 114 itself (for example, a local memory on a server), or may be provided by means of a network (for example, a server connects to a network storage device through a network). The network hardware 116 may be a switch, a router, and/or other network devices, and the network hardware 116 is configured to implement communication among multiple devices, and the multiple devices are connected by means of a wireless connection or a wired connection.

The virtualization layer in the NFVI 130 is configured to abstract a hardware resource at the hardware resource layer, decouple the VNF 108 from a physical layer to which the hardware resource belongs, and provide a virtual resource to the VNF.

The virtual resource layer may include the virtual computing 110, the virtual storage 118, and the virtual network 120. The virtual computing 110 and the virtual storage 118 may be provided to the VNF 108 in a form of a virtual machine or another virtual container. For example, one or more VNFs 108 may be deployed on one virtual machine. The virtualization layer forms the virtual network 120 by abstracting the network hardware 116. The virtual network 120, for example, a virtual switch (such as Vswitches) is configured to implement communication among multiple virtual machines, or among multiple virtual containers of other types that carry the VNF. Virtualization of network hardware may be implemented by means of technologies such as a virtual LAN (Vritual LAN, VLAN), a virtual private LAN service (Virtual Private LAN Service, VPLS), a virtual extensible local area network (Virtual eXtensible Local Area Network, VxLAN), or network virtualization using generic routing encapsulation (Nerwork Virtualization using Generic Routing Encapsulation, NVGRE).

Primarily oriented to telecommunications service operators, the OSS/BSS 124 provides an integrated network management and service operating function, including network management (for example, fault monitoring and network information collection), accounting management and customer service management. The service, VNF and infrastructure description system 126 is described in detail in the ETSI GS NFV 002 v1.1.1 standard, and details are not described herein again in this embodiment of the present invention.

The NFV-MANO 128 may be configured to implement monitoring and management on the VNF 108 and the NFVI 130. The orchestrator 102 may communicate with one or more VNFMs 104 to implement a request related to a resource, send configuration information to the VNFM 104, and collect status information of the VNF 108. Moreover, the orchestrator 102 can further communicate with the VIM 106 to implement resource allocation, and/or, implement the reservation and exchange of configuration information and status information of a virtualized hardware resource. The VNFM 104 may be configured to manage one or more VNFs 108 and execute various management functions, for example, initializing, updating, querying, and/or terminating the VNF 108. The VIM 106 may be configured to control and manage interaction between the VNF 108 and the computing hardware 112, the storage hardware 114, the network hardware 116, the virtual computing 110, the virtual storage 118, and the virtual network 120. For example, the VIM 106 may be configured to execute an operation of resource allocation to the VNF 108. The VNFM 104 and the VIM 106 may communicate with each other to exchange configuration and status information of the virtualized hardware resource.

The NFVI 130 includes hardware and software, and the hardware and software jointly establish a virtualized environment to deploy, manage and execute the VNF 108. In other words, the hardware resource layer and the virtual resource layer are configured to provide the virtual resource to the VNF 108, for example, the virtual machine and/or the virtual container of anther form.

As shown in FIG. 1, the VNFM 104 may communicate with the VNF 108 and the EMS 122 to execute life cycle management of the VNF and implement the exchange of the configuration/status information. The VNF 108 is virtualization of at least one network function, and the network function is provided by a physical network device previously. In an implementation manner, the VNF 108 may be a virtualized mobility management entity (Mobility Management Entity, MME) node, configured to provide all network functions provided by a typical non-virtualized MME device. In another implementation manner, the VNF 108 may be configured to implement functions of some of all components provided by the non-virtualized MME device. One or more VNFs 108 may be deployed on one virtual machine (or a virtual container of another form). The EMS 122 may be configured to manage the one or more VNFs.

It can be known according to the descriptions of the function of each component in the system architecture of the NFV system, the VNFM 104 is configured to execute various management functions on the VNF 108, for example, initializing, updating, querying, and terminating the VNF 108, and the VIM 106 is configured to control and manage interaction between the VNF 108 and other parts. Therefore, if one VNF 108 is to be implemented, the VNFM 104 and the VIM 106 need to work collaboratively. Therefore, the VNFM 104 and the VIM 106 can communicate with each other to exchange configuration and status information of a virtualized hardware resource. The VNFM 104 and the VIM 106 establish a communication connection by using an interface. For example, the VNFM 104 interacts with the VIM 106 by using a VNFM-VI interface.

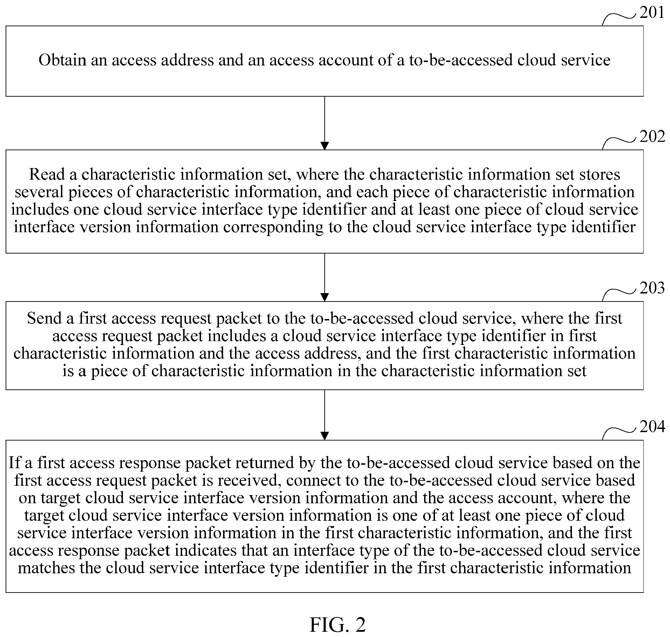

Referring to FIG. 2, a method for accessing a cloud service provided in an embodiment of the present invention is applied to various virtualized access devices, such as a VNFM and a network functions virtualization orchestrator (Network Functions Virtualization Orchestrator, NFVO), that connect to a VIM (which is specifically a cloud service) in network functions virtualization.

A processing process of the method includes:
Step 201: Obtain an access address and an access account of a to-be-accessed cloud service.

First, after a to-be-accessed cloud service is determined, a virtualized access device needs to obtain an access address and an access account of the to-be-accessed cloud service. The obtaining method may be pre-storing, direct entering by a user or the like, and is not limited herein in the present invention.

Step 202: Read a characteristic information set, where the characteristic information set stores several pieces of characteristic information, and each piece of characteristic information includes one cloud service interface type identifier and at least one piece of cloud service interface version information corresponding to the cloud service interface type identifier.

The virtualized access device or another external storage device stores a preset characteristic information set. The characteristic information set stores several pieces of characteristic information, and each piece of characteristic information includes one cloud service interface type identifier and at least one piece of corresponding cloud service interface version information. Optionally, each piece of characteristic information further includes software resource information corresponding to the cloud service interface version information. Generally, in one piece of characteristic information, one cloud service interface type identifier corresponds to one piece of cloud service interface version information. Specifically, each cloud service interface type corresponds to a unique cloud service interface type identifier, and the identifier may be information such as a key characteristic and a name of the cloud service interface type; the cloud service interface version information may include a cloud service interface version uniform resource locator (Uniform Resource Locator, URL), and/or, a cloud service interface version identifier; and the software resource information corresponding to the cloud service interface version information may include any one or any combination of the following: a software package name, a software package address, or a software package identifier.

Preferably, an operator may manage the characteristic information set, for example, performing operations such as adding, deleting, modifying, querying, and updating characteristic information, and does not need to upgrade or maintain the virtualized access device. When new characteristic information appears or stored characteristic information changes, the characteristic information set may be updated dynamically and managed flexibly, so that a degree of work complexity of the operator is reduced and efficiency is improved.

Step 203: Send a first access request packet to the to-be-accessed cloud service, where the first access request packet includes a cloud service interface type identifier in first characteristic information and the access address, and the first characteristic information is a piece of characteristic information in the characteristic information set.

The first characteristic information may be selected from the characteristic information set according to a preset order, for example, in ascending order of automatically sorted item numbers or according to a preset priority order, or selected randomly. This is not limited in this embodiment of the present invention.

Specifically, when step 203 is executed, the first access request packet is constructed based on the cloud service interface type identifier in the first characteristic information and the obtained access address, so that the first access request packet carries the cloud service interface type identifier and the access address. The first access request packet may be sent to the to-be-accessed cloud service corresponding to the access address. After receiving the access request packet, the to-be-accessed cloud service parses the access request packet, and determines the carried cloud service interface type identifier. The to-be-accessed cloud service determines whether its own interface type matches the cloud service interface type identifier, and when determining that the interface type matches the cloud service interface type identifier, returns, to the virtualized access device, a first access response packet that indicates successful matching. For example, the first access response packet may include an identifier that indicates that successful matching. Otherwise, the to-be-accessed cloud service returns an access response packet indicating failed matching (for example, the access response packet may include an identifier that indicates failed matching), or does not perform any operation.

Step 204: If a first access response packet returned by the to-be-accessed cloud service based on the first access request packet is received, connect to the to-be-accessed cloud service based on target cloud service interface version information and the access account, where the target cloud service interface version information is one of at least one piece of cloud service interface version information in the first characteristic information, and the first access response packet indicates that an interface type of the to-be-accessed cloud service matches the cloud service interface type identifier in the first characteristic information.

The first access response packet indicates that the interface type of the to-be-accessed cloud service matches the cloud service interface type identifier in the first characteristic information. Specifically, the first access response packet may include a successful matching indicator for indicating that the interface type of the to-be-accessed cloud service matches the cloud service interface type identifier in the first characteristic information.

When the virtualized access device receives the first access response packet that includes the successful matching indicator and that is returned by the to-be-accessed cloud service based on the access request packet, it indicates that the cloud service interface type corresponding to the cloud service interface type identifier in the first characteristic information is a type of an interface with which the virtualized access device establishes a connection to the to-be-accessed cloud service.

If the first access response packet returned by the to-be-accessed cloud service based on the first access request packet is not received, a second access request packet is sent to the to-be-accessed cloud service, where the second access request packet includes a cloud service interface type identifier in second characteristic information and the access address, and the second characteristic information is a piece of characteristic information different from the first characteristic information in the characteristic information set, until a second access response packet that includes a successful matching indicator and that is returned by the to-be-accessed cloud service based on the second access request packet is received. Otherwise, a third access request packet is continuously sent to the to-be-accessed cloud service. The first access response packet and the second access response packet have a same physical meaning, and are merely different in that they are access response packets fed back at different times.

When the second characteristic information is selected from the characteristic information set, selection of the second characteristic information is similar to that of the first characteristic information. For example, one piece of characteristic information next to the first characteristic information may be selected in ascending order of automatically sorted item numbers, or characteristic information having a priority next to a priority of the first characteristic information may be selected according to a preset priority order, or characteristic information may be selected randomly. This is not limited in this embodiment of the present invention.

The virtualized access device receives the first access response packet returned by the to-be-accessed cloud service based on the access request packet. Specifically, the virtualized access device selects, from the at least one piece of cloud service interface version information corresponding to the cloud service interface type identifier in the first characteristic information, a piece of cloud service interface version information as target cloud service interface version information, and the selection may be random selection. Generally, in one piece of characteristic information, one cloud service interface type identifier corresponds to one piece of cloud service interface version information. Therefore, unique cloud service interface version information may be used as the target cloud service interface version information.

If the cloud service interface version information includes the cloud service interface version URL, specifically, the connecting to the to-be-accessed cloud service based on target cloud service interface version information and the access account includes:
sending a version request packet to the to-be-accessed cloud service, where the version request packet includes the cloud service interface version URL included in the target cloud service interface version information;
receiving a version response packet returned by the to-be-accessed cloud service based on the version request packet, where the version response packet includes at least one cloud service interface version identifier of the to-be-accessed cloud service;
parsing the version response packet to obtain the at least one cloud service interface version identifier of the to-be-accessed cloud service; and
loading a software resource indicated by a target cloud service interface version identifier, and connecting to the to-be-accessed cloud service according to the obtained access account, where the target cloud service interface version identifier is one of the at least one cloud service interface version identifier included in the version response packet.

Specifically, the cloud service interface version identifier may be a version number, a version name and the like. The software resource is a client software package, for example, a Hypertext Transfer Protocol (Hyper Text Transport Protocol, HTTP) client software package.

The software resource indicated by the target cloud service interface version identifier is loaded, and the to-be-accessed cloud service is logged in by means the obtained access account, so as to establish a connection to the to-be-accessed cloud service.

The method for accessing a cloud service provided in this embodiment of the present invention further includes: updating the characteristic information set, specifically including:
performing an adding operation on the characteristic information set, specifically including: adding a to-be-added cloud service interface type identifier and at least one piece of cloud service interface version information corresponding to the to-be-added cloud service interface type identifier to the characteristic information set as new characteristic information; or
performing a modification operation on the characteristic information set, specifically including: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

By using the method for accessing a cloud service in this embodiment of the present invention, without any manual setting, an access device can construct a first access request packet by means of a cloud service interface type identifier of a piece of characteristic information in a preset characteristic information set, and send the first access request packet to a to-be-accessed cloud service; and upon reception of a first access response packet that indicates successful matching, the access device can determine a cloud service interface type and cloud service interface version information of the to-be-accessed cloud service, and therefore can connect to the to-be-accessed cloud service adaptively, reducing a degree of complexity of establishing a connection to a cloud service, improving work efficiency, and also avoiding incorrect matching between a cloud service interface type and a cloud service interface version, thereby improving a success rate of accessing a cloud service. Further, the access device can further manage the characteristic information set, and does not need to upgrade or maintain the virtualized access device. When new characteristic information appears or stored characteristic information changes, the characteristic information set may be updated dynamically and managed flexibly, so that a degree of work complexity of an operator is reduced and efficiency is improved.

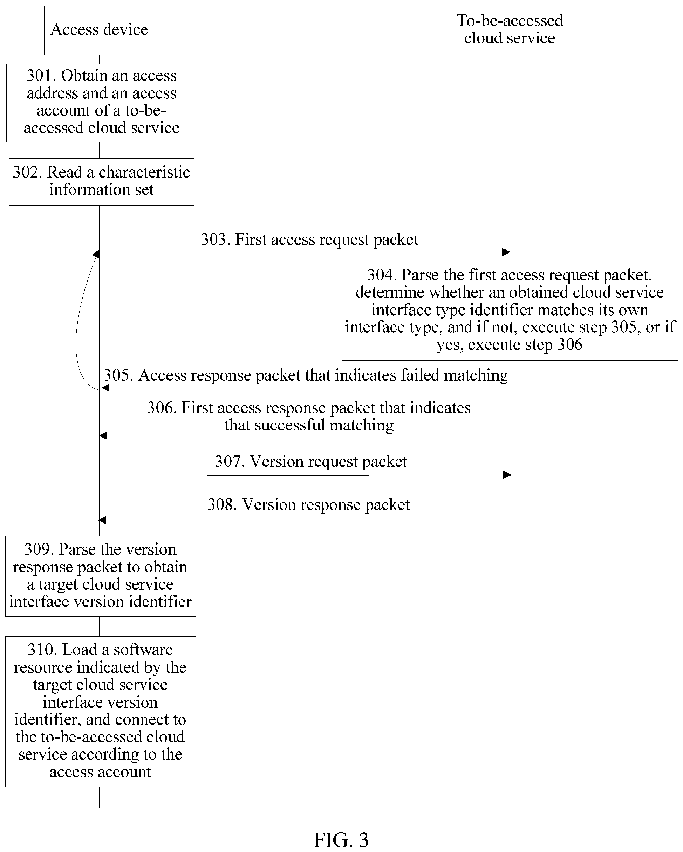

Based on the foregoing embodiment, an embodiment of the present invention provides a specific process of a method for accessing a cloud service. Specifically, an access device may be a VNFM. Referring to FIG. 3, the specific process includes:
Step 301: The access device obtains an access address and an access account of a to-be-accessed cloud service.

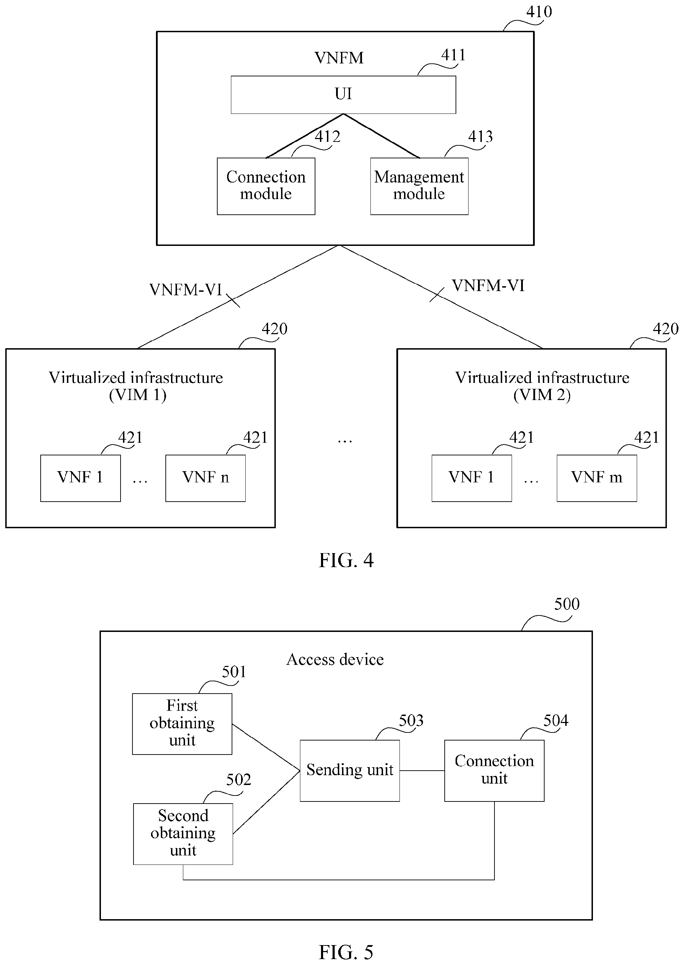

Specifically, the access address and the access account of the to-be-accessed cloud service that are obtained by the access device may be obtained from a storage module that pre-stores the access address and the access account, or may be obtained directly according to entering by a user. Specifically, using the VNFM as an example, referring to the communications system architecture of a VNFM and a VIM shown in FIG. 4, the VNFM 410 may be various network entity devices. The VNFM 410 may include a user interface (User Interface, UI) 411, a connection module 412 and a management module 413; and each virtualized infrastructure 420 corresponds to a VIM, and different virtualized infrastructures 420 correspond to different VIM types, that is, different cloud service interface types or cloud service interface versions, and as shown in the figure, a VIM 1 and a VIM 2 are of different types. The VNFM 410 establishes a communication connection to the VIM 420 by using a VNFM-VI interface, so that multiple VNFs 421 are implemented in each VIM 420. The UI 411 in the VNFM 410 is configured to interact with the user. for example, input the access address and the access account of the to-be-accessed cloud service. The connection module 412 is configured to implement connection to the VIM 420, and the management module 413 is configured to manage a characteristic information set. It should be noted that each component module in FIG. 4 is an exemplary description for the convenience of understanding the technical solution. The user interface (User Interface, UI) 411, the connection module 412, and the management module 413 are divided by functions. The communications system architecture of the VNFM and the VIM, a forming manner of the VNFM, and a forming manner of the VIM are not limited in this embodiment of the present invention.

In a case of direct entering by the user, a form of the access address obtained by the VNFM 410 is http://IP:port/xxx or http://domain name/xxx, and the access account may include a user name and a password. Optionally, the user name is a VIM name defined by the user.

Step 302: The access device reads a characteristic information set.

The characteristic information set stores several pieces of characteristic information, and each piece of characteristic information includes one cloud service interface type identifier and at least one piece of cloud service interface version information corresponding to the cloud service interface type identifier.

The characteristic information set read by the access device may be read from a local storage module, or may be read from other storage devices externally-connected to the access device. It should be understood that after the access device starts and before a cloud service is accessed, the access device initializes the characteristic information set. For example, the access device loads system preset characteristic information from a file or a database.

Obviously, the characteristic information in the characteristic information set is preconfigured. Therefore, the access device can manage the characteristic information in the characteristic information set. Exemplarily, the management module 413 in the VNFM 410 shown in FIG. 4 can implement a management function on the characteristic information. For example, when an administrator adds characteristic information, the administrator first selects a characteristic information "adding" function in the UI 411, then enters an added cloud service interface type identifier and at least one piece of cloud service interface version information corresponding to the cloud service interface type identifier, and finally uploads at least one software resource corresponding to each cloud service interface version information, or enters a storage path of a software resource corresponding to each cloud service interface version information. Each software resource corresponds to a unique cloud service interface version identifier.

Specifically, the cloud service interface type identifier may be information such as a key characteristic and a name of a cloud service interface type. When the cloud service interface type identifier is the key characteristic of the cloud service interface type, for example, openstack, the key characteristic of the cloud service interface type corresponding to each cloud service may be obtained by searching a manual.

Specifically, the cloud service interface version information may include a cloud service interface version URL.

Optionally, operations such as deletion, modification, querying, or importing and saving may be further performed on the characteristic information in the characteristic information set. Exemplarily, these operations may be implemented by the UI 411 and the management module 413 in the VNFM 410.

Specifically, the performing an adding operation on the characteristic information set specifically includes: adding a to-be-added cloud service interface type identifier and at least one piece of cloud service interface version information corresponding to the to-be-added cloud service interface type identifier to the characteristic information set as new characteristic information.

The performing a modification operation on the characteristic information set specifically includes: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

Specifically, after the characteristic information in the characteristic information set is updated, a software resource corresponding to the added or modified cloud service interface version information further needs to be uploaded.

Step 303: The access device sends a first access request packet to the to-be-accessed cloud service.

The first access request packet includes a cloud service interface type identifier in first characteristic information and the access address in the to-be-accessed cloud service, and the first characteristic information is a piece of characteristic information in the characteristic information set. The first access request packet includes the access address of the to-be-accessed cloud service, so that the first access request packet is sent to the to-be-accessed cloud service. For example, for the http protocol, the following packet is constructed: Get URL.

The first characteristic information may be selected from the characteristic information set according to a preset order, for example, in ascending order of automatically sorted item numbers or according to a preset priority order, or selected randomly.

Step 304: The to-be-accessed cloud service parses the first access request packet, determines whether an obtained cloud service interface type identifier matches its own interface type, and if not, executes step 305, or if yes, executes step 306.

After receiving the first access request packet, the to-be-accessed cloud service parses the first access request packet to obtain the cloud service interface type identifier included in the first access request packet, and performs matching on the cloud service interface type identifier and an interface type of the to-be-accessed cloud service.

Step 305: The to-be-accessed cloud service sends, to the access device, an access response packet that indicates unsuccessful matching.

During execution of step 304, when the cloud service to be accessed determines that the cloud service interface type identifier obtained through parsing does not match the interface type of the to-be-accessed cloud service, the to-be-accessed cloud service sends, to the access device, an access response packet that indicates unsuccessful matching, so that the access device continues to execute step 303, to construct a second access request packet based on a cloud service interface type identifier in second characteristic information different from the first characteristic information in the characteristic information set and the access address of the to-be-accessed cloud service, and send the second access request packet to the to-be-accessed cloud service, until the to-be-accessed cloud service sends, to the access device, an N^{th} access response packet that indicates that successful matching.

Step 306: The to-be-accessed cloud service sends, to the access device, a first access response packet that indicates successful matching.

During execution of step 304, when the to-be-accessed cloud service determines that the cloud service interface type identifier obtained through parsing matches the interface type of the to-be-accessed cloud service, the to-be-accessed cloud service sends, to the access device, a first access response packet that indicates successful matching, and notifies the access device that the matching is successful, that is, the interface type of the to-be-accessed cloud service matches the cloud service interface type identifier in the first characteristic information.

Optionally, the first access response packet may include a successful matching indicator, to be distinguished from the access response packet that indicates unsuccessful matching in step 305.

Generally speaking, step 302 to step 306 may be understood as: after the characteristic information is obtained from the characteristic information set, detection is performed cyclically on the interface type of the to-be-accessed cloud service (a VIM) based on the cloud service interface type identifier in the characteristic information, until a matched interface type identifier is obtained, thereby completing automatic detection of the interface type of the to-be-accessed cloud service.

Step 307: The access device sends a version request packet to the to-be-accessed cloud service.

After receiving the first access response packet that indicates successful matching, the access device selects, from the at least one piece of cloud service interface version information corresponding to the cloud service interface type identifier in the first characteristic information, a piece of cloud service interface version information as target cloud service interface version information. The cloud service interface version information includes a cloud service interface version URL.

The version request packet is sent to the to-be-accessed cloud service based on the cloud service interface version URL included in the target cloud service interface version information.

Step 308: The to-be-accessed cloud service sends a version response packet to the access device.

After receiving the version request packet, the to-be-accessed cloud service sends, to the access device, a version response packet including at least one cloud service interface version identifier, where each cloud service interface version identifier corresponds to a cloud service interface version supported by the to-be-accessed cloud service.

Step 309: The access device parses the version response packet to obtain a target cloud service interface version identifier.

The access device parses the version response packet to obtain at least one cloud service interface version identifier of the to-be-accessed cloud service, and selects a cloud service interface version identifier from the at least one cloud service interface version identifier as a target cloud service interface version identifier.

Step 310: The access device loads a software resource indicated by the target cloud service interface version identifier, and connects to the to-be-accessed cloud service according to the access account. The access device loads a software resource indicated by the target cloud service interface version identifier, and logs in to the to-be-accessed cloud service by using the obtained access account of the to-be-accessed cloud service, so as to establish a connection to the to-be-accessed cloud service. Exemplarily, after the connection module 412 in FIG. 4 obtains an access address and an access account of the VIM 420 by using the UI 411, all the foregoing steps of constructing a packet and performing signaling interaction with the VIM 420 can be implemented.

By using the method for accessing a cloud service provided in this embodiment of the present invention, without any manual setting, an access device such as a VNFM can construct a first access request packet by means of a cloud service interface type identifier of a piece of characteristic information in a preset characteristic information set, and send the first access request packet to a to-be-accessed cloud service; and upon reception of a first access response packet that indicates successful matching, the access device can determine a cloud service interface type and cloud service interface version information of the to-be-accessed cloud service, and therefore can connect to the to-be-accessed cloud service adaptively, reducing a degree of complexity of establishing a connection to a cloud service, improving work efficiency, and also avoiding incorrect matching between a cloud service interface type and a cloud service interface version, thereby improving a success rate of accessing a cloud service. Further, the access device can further manage the characteristic information set, and does not need to upgrade or maintain the virtualized access device. When new characteristic information appears or stored characteristic information changes, the characteristic information set may be updated dynamically and managed flexibly, so that a degree of work complexity of an operator is reduced and efficiency is improved.

The present invention further provides an access device based on the foregoing embodiments. Referring to FIG. 5, the access device includes: a first obtaining unit 501, a second obtaining unit 502, a sending unit 503, and a connection unit 504, where
the first obtaining unit 501 is configured to obtain an access address and an access account of a to-be-accessed cloud service;
the second obtaining unit 502 is configured to read a characteristic information set, where the characteristic information set stores several pieces of characteristic information, and each piece of characteristic information includes one cloud service interface type identifier and at least one piece of cloud service interface version information corresponding to the cloud service interface type identifier;
the sending unit 503 is configured to send a first access request packet to the to-be-accessed cloud service, where the first access request packet includes a cloud service interface type identifier in first characteristic information and the access address, and the first characteristic information is a piece of characteristic information in the characteristic information set; and
the connection unit 504 is configured to: if a first access response packet returned by the to-be-accessed cloud service based on the first access request packet is received, connect to the to-be-accessed cloud service based on target cloud service interface version information and the access account, where the target cloud service interface version information is one of at least one piece of cloud service interface version information in the first characteristic information, and the first access response packet indicates that an interface type of the to-be-accessed cloud service matches the cloud service interface type identifier in the first characteristic information.

It should be noted that if the access address and the access account of the to-be-accessed cloud service are pre-stored,
specifically, the connection unit 504 is further configured to:
if the first access response packet is not received, send a second access request packet to the to-be-accessed cloud service, where the second access request packet includes a cloud service interface type identifier in second characteristic information and the access address, and the second characteristic information is a piece of characteristic information different from the first characteristic information in the characteristic information set.

Optionally, the cloud service interface version information includes a cloud service interface version uniform resource locator URL.

Specifically, in the aspect of connecting to the to-be-accessed cloud service based on the target cloud service interface version information and the access account, the connection unit 504 is configured to:
send a version request packet to the to-be-accessed cloud service, where the version request packet includes the cloud service interface version URL included in the target cloud service interface version information;
receive a version response packet returned by the to-be-accessed cloud service based on the version request packet, where the version response packet includes at least one cloud service interface version identifier of the to-be-accessed cloud service;
parse the version response packet to obtain the at least one cloud service interface version identifier of the to-be-accessed cloud service; and
load a software resource indicated by a target cloud service interface version identifier, and connect to the to-be-accessed cloud service according to the access account, where the target cloud service interface version identifier is one of the at least one cloud service interface version identifier included in the version response packet.

The access device further includes an updating unit, configured to update the characteristic information set.

The updating unit is specifically configured to:
perform an adding operation on the characteristic information set, specifically including: adding a to-be-added cloud service interface type identifier and at least one piece of cloud service interface version information corresponding to the to-be-added cloud service interface type identifier to the characteristic information set as new characteristic information; or
perform a modification operation on the characteristic information set, specifically including: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

It should be noted that division of the units in this embodiment of the present invention is exemplary, and is only division of logical functions. There might be another division manner in practical implementation. For example, the first obtaining unit and the second obtaining unit may be a same obtaining unit or different obtaining units, or some characteristics may be ignored, or not executed. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

Without any manual setting, the access device provided in this embodiment of the present invention can construct a first access request packet by means of a cloud service interface type identifier of a piece of characteristic information in a preset characteristic information set, and send the first access request packet to a to-be-accessed cloud service; upon reception of a first access response packet that indicates successful matching, the access device can determine a cloud service interface type and cloud service interface version information of the to-be-accessed cloud service, and therefore connect to the to-be-accessed cloud service adaptively, reducing a degree of complexity of establishing a connection to a cloud service, improving work efficiency, and also avoiding incorrect matching between a cloud service interface type and a cloud service interface version, thereby improving a success rate of accessing a cloud service. Further, the access device can further manage the characteristic information set, and does not need to upgrade or maintain the virtualized access device. When new characteristic information appears or stored characteristic information changes, the characteristic information set may be updated dynamically and managed flexibly, so that a degree of work complexity of an operator is reduced and efficiency is improved.

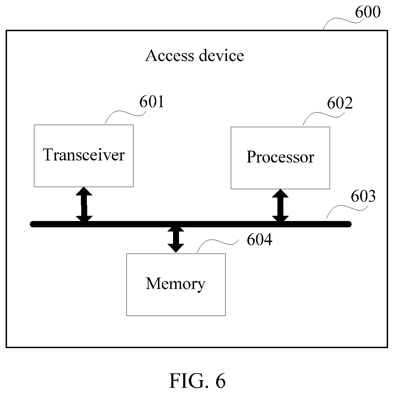

Based on the foregoing embodiments, the present invention further provides an access device 600. As shown in FIG. 6, the access device 600 includes: a transceiver 601, a processor 602, a bus 603, and a memory 604.

The transceiver 601, the processor 602, and the memory 604 are connected to each other by means of the bus 603. The bus 603 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, or the like. For convenience of representation, only a bold line is used for representation in FIG. 6, but it does not represent that there is only one bus or one type of buses. The transceiver 601 is configured to communicate with a to-be-accessed cloud service, for example, send a first access request packet and a second access request packet to the to-be-accessed cloud service, and receive a first access response packet sent by the to-be-accessed cloud service; and send a version request packet to the to-be-accessed cloud service, and receive a version response packet sent by the to-be-accessed cloud service.

The processor 602 is configured to implement the method for accessing a cloud service shown in FIG. 2 according to the embodiment of the present invention, including:
obtaining an access address and an access account of a to-be-accessed cloud service;
reading a characteristic information set, where the characteristic information set stores several pieces of characteristic information, and each piece of characteristic information includes one cloud service interface type identifier and at least one piece of cloud service interface version information corresponding to the cloud service interface type identifier;
sending a first access request packet to the to-be-accessed cloud service, where the first access request packet includes a cloud service interface type identifier in first characteristic information and the access address, and the first characteristic information is a piece of characteristic information in the characteristic information set; and
if a first access response packet returned by the to-be-accessed cloud service based on the first access request packet is received, connecting to the to-be-accessed cloud service based on target cloud service interface version information and the obtained access account, where the target cloud service interface version information is one of at least one piece of cloud service interface version information in the first characteristic information, and the first access response packet indicates that an interface type of the to-be-accessed cloud service matches the cloud service interface type identifier in the first characteristic information.

Optionally, if the first access response packet is not received, a second access request packet is sent to the to-be-accessed cloud service, where the second access request packet includes a cloud service interface type identifier in second characteristic information and the access address, and the second characteristic information is a piece of characteristic information different from the first characteristic information in the characteristic information set.

Optionally, the cloud service interface version information includes a cloud service interface version URL.

The connecting to the to-be-accessed cloud service based on the target cloud service interface version information and the obtained access account includes:
sending a version request packet to the to-be-accessed cloud service, where the version request packet includes the cloud service interface version URL included in the target cloud service interface version information;
receiving a version response packet returned by the to-be-accessed cloud service based on the version request packet, where the version response packet includes at least one cloud service interface version identifier of the to-be-accessed cloud service;
parsing the version response packet to obtain the at least one cloud service interface version identifier of the to-be-accessed cloud service; and
loading a software resource indicated by a target cloud service interface version identifier, and connecting to the to-be-accessed cloud service according to the obtained access account, where the target cloud service interface version identifier is one of the at least one cloud service interface version identifier included in the version response packet.

The processor 602 may further update the characteristic information set.

Specifically, the updating the characteristic information set includes:
performing an adding operation on the characteristic information set, specifically including: adding a to-be-added cloud service interface type identifier and at least one piece of cloud service interface version information corresponding to the to-be-added cloud service interface type identifier to the characteristic information set as new characteristic information; or
performing a modification operation on the characteristic information set, specifically including: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

The access device 600 further includes the memory 604, configured to store a program. Specifically, the program may include program code, where the program code includes a computer operation instruction. The memory 604 may include a random access memory (random access memory, RAM for short), or may further include a non-volatile memory (non-volatile memory), such as at least one disk memory. The processor 602 executes the application stored in the memory 604 to implement the method for accessing a cloud service.

Without any manual setting, the access device provided in this embodiment of the present invention can construct a first access request packet by means of a cloud service interface type identifier of a piece of characteristic information in a preset characteristic information set, and send the first access request packet to a to-be-accessed cloud service; upon reception of a first access response packet that indicates successful matching, the access device can determine a cloud service interface type and cloud service interface version information of the to-be-accessed cloud service, and therefore can connect to the to-be-accessed cloud service adaptively, reducing a degree of complexity of establishing a connection to a cloud service, improving work efficiency, and also avoiding incorrect matching between a cloud service interface type and a cloud service interface version, thereby improving a success rate of accessing a cloud service. Further, the access device can further manage the characteristic information set, and does not need to upgrade or maintain the virtualized access device. When new characteristic information appears or stored characteristic information changes, the characteristic information set may be updated dynamically and managed flexibly, so that a degree of work complexity of an operator is reduced and efficiency is improved. Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A method for accessing a cloud service, wherein the method is applied to an access device, and the method comprises:
obtaining an access address and an access account of a to-be-accessed cloud service;
reading a characteristic information set, wherein the characteristic information set stores several pieces of characteristic information, and each piece of characteristic information comprises one cloud service interface type identifier and at least one piece of cloud service interface version information corresponding to the cloud service interface type identifier;
sending a first access request packet to the to-be-accessed cloud service, wherein the first access request packet comprises a cloud service interface type identifier in first characteristic information and the access address, and the first characteristic information is a piece of characteristic information in the characteristic information set; and
if a first access response packet returned by the to-be-accessed cloud service based on the first access request packet is received, connecting to the to-be-accessed cloud service based on target cloud service interface version information and the access account, wherein the target cloud service interface version information is one of at least one piece of cloud service interface version information in the first characteristic information, and the first access response packet indicates that an interface type of the to-be-accessed cloud service matches the cloud service interface type identifier in the first characteristic information.

2. The method according to claim 1, wherein the method further comprises:
if the first access response packet is not received, sending a second access request packet to the to-be-accessed cloud service, wherein the second access request packet comprises a cloud service interface type identifier in second characteristic information and the access address, and the second characteristic information is a piece of characteristic information different from the first characteristic information in the characteristic information set.

3. The method according to claim 1 or 2, wherein the cloud service interface version information comprises a cloud service interface version uniform resource locator URL.

4. The method according to claim 3, wherein the connecting to the to-be-accessed cloud service based on target cloud service interface version information and the access account comprises:
sending a version request packet to the to-be-accessed cloud service, wherein the version request packet comprises the cloud service interface version URL comprised in the target cloud service interface version information;
receiving a version response packet returned by the to-be-accessed cloud service based on the version request packet, wherein the version response packet comprises at least one cloud service interface version identifier of the to-be-accessed cloud service;
parsing the version response packet to obtain the at least one cloud service interface version identifier of the to-be-accessed cloud service;
loading a software resource indicated by a target cloud service interface version identifier, and connecting to the to-be-accessed cloud service according to the access account, wherein the target cloud service interface version identifier is one of the at least one cloud service interface version identifier comprised in the version response packet.

5. The method according to any one of claims 1 to 4, wherein the method further comprises:
updating the characteristic information set.

6. The method according to claim 5, wherein the updating the characteristic information set comprises:
performing an adding operation on the characteristic information set, specifically comprising: adding a to-be-added cloud service interface type identifier and at least one piece of cloud service interface version information corresponding to the to-be-added cloud service interface type identifier to the characteristic information set as new characteristic information; or
performing a modification operation on the characteristic information set, specifically comprising: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

7. An access device, comprising:
a first obtaining unit, configured to obtain an access address and an access account of a to-be-accessed cloud service;
a second obtaining unit, configured to read a characteristic information set, wherein the characteristic information set stores several pieces of characteristic information, and each piece of characteristic information comprises one cloud service interface type identifier and at least one piece of cloud service interface version information corresponding to the cloud service interface type identifier;
a sending unit, configured to send a first access request packet to the to-be-accessed cloud service, wherein the first access request packet comprises a cloud service interface type identifier in first characteristic information and the access address, and the first characteristic information is a piece of characteristic information in the characteristic information set; and
a connection unit, configured to: if a first access response packet returned by the to-be-accessed cloud service based on the first access request packet is received, connect to the to-be-accessed cloud service based on target cloud service interface version information and the access account, wherein the target cloud service interface version information is one of at least one piece of cloud service interface version information in the first characteristic information, and the first access response packet indicates that an interface type of the to-be-accessed cloud service matches the cloud service interface type identifier in the first characteristic information.

8. The access device according to claim 7, wherein the connection unit is further configured to:
if the first access response packet is not received, send a second access request packet to the to-be-accessed cloud service, wherein the second access request packet comprises a cloud service interface type identifier in second characteristic information and the access address, and the second characteristic information is a piece of characteristic information different from the first characteristic information in the characteristic information set.

9. The access device according to claim 7 or 8, wherein the cloud service interface version information comprises a cloud service interface version uniform resource locator URL.

10. The access device according to claim 9, wherein in the aspect of connecting to the to-be-accessed cloud service based on the target cloud service interface version information and the access account, the connection unit is specifically configured to:
send a version request packet to the to-be-accessed cloud service, wherein the version request packet comprises the cloud service interface version URL comprised in the target cloud service interface version information;
receive a version response packet returned by the to-be-accessed cloud service based on the version request packet, wherein the version response packet comprises at least one cloud service interface version identifier of the to-be-accessed cloud service;
parse the version response packet to obtain the at least one cloud service interface version identifier of the to-be-accessed cloud service; and
load a software resource indicated by a target cloud service interface version identifier, and connect to the to-be-accessed cloud service according to the access account, wherein the target cloud service interface version identifier is one of the at least one cloud service interface version identifier comprised in the version response packet.

11. The access device according to any one of claims 7 to 10, wherein the access device further comprises: an updating unit, configured to update the characteristic information set.

12. The access device according to claim 11, wherein the updating unit is specifically configured to:
perform an adding operation on the characteristic information set, specifically comprising: adding a to-be-added cloud service interface type identifier and at least one piece of cloud service interface version information corresponding to the to-be-added cloud service interface type identifier to the characteristic information set as new characteristic information; or
perform a modification operation on the characteristic information set, specifically comprising: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.

13. An access device, comprising:
a memory, configured to store a program;
a processor, configured to call the program stored in the memory, so that the access device executes the following method: obtaining an access address and an access account of a to-be-accessed cloud service;
reading a characteristic information set, wherein the characteristic information set stores several pieces of characteristic information, and each piece of characteristic information comprises one cloud service interface type identifier and at least one piece of cloud service interface version information corresponding to the cloud service interface type identifier;
sending a first access request packet to the to-be-accessed cloud service, wherein the first access request packet comprises a cloud service interface type identifier in first characteristic information and the access address, and the first characteristic information is a piece of characteristic information in the characteristic information set; and
if a first access response packet returned by the to-be-accessed cloud service based on the first access request packet is received, connecting to the to-be-accessed cloud service based on target cloud service interface version information and the access account, wherein the target cloud service interface version information is one of at least one piece of cloud service interface version information in the first characteristic information, and the first access response packet indicates that an interface type of the to-be-accessed cloud service matches the cloud service interface type identifier in the first characteristic information.

14. The access device according to claim 13, wherein the processor is further configured to:
if the first access response packet is not received, send a second access request packet to the to-be-accessed cloud service, wherein the second access request packet comprises a cloud service interface type identifier in second characteristic information and the access address, and the second characteristic information is a piece of characteristic information different from the first characteristic information in the characteristic information set.

15. The access device according to claim 13 or 14, wherein the cloud service interface version information comprises a cloud service interface version uniform resource locator URL.

16. The access device according to claim 15, wherein when the processor connects to the to-be-accessed cloud service based on the target cloud service interface version information and the access account, the processor is specifically configured to:
send a version request packet to the to-be-accessed cloud service, wherein the version request packet comprises the cloud service interface version URL comprised in the target cloud service interface version information;
receive a version response packet returned by the to-be-accessed cloud service based on the version request packet, wherein the version response packet comprises at least one cloud service interface version identifier of the to-be-accessed cloud service;
parse the version response packet to obtain the at least one cloud service interface version identifier of the to-be-accessed cloud service; and
load a software resource indicated by a target cloud service interface version identifier, and connect to the to-be-accessed cloud service according to the access account, wherein the target cloud service interface version identifier is one of the at least one cloud service interface version identifier comprised in the version response packet.

17. The access device according to any one of claims 13 to 16, wherein the processor is further configured to: update the characteristic information set.

18. The access device according to claim 17, wherein when updating the characteristic information set, the processor is specifically configured to:
perform an adding operation on the characteristic information set, specifically comprising: adding a to-be-added cloud service interface type identifier and at least one piece of cloud service interface version information corresponding to the to-be-added cloud service interface type identifier to the characteristic information set as new characteristic information; or
perform a modification operation on the characteristic information set, specifically comprising: determining to-be-modified characteristic information in the characteristic information set, and modifying a cloud service interface type identifier in the to-be-modified characteristic information and/or at least one piece of cloud service interface version information corresponding to the cloud service interface type identifier in the to-be-modified characteristic information.
